# Europäisches Patentamt

# European Patent Office

# Office européen des brevets

(19)

(11) Veröffentlichungsnummer: **0 053 324**

**B2**

(12) # NEUE EUROPÄISCHE PATENTSCHRIFT

(45) Veröffentlichungstag der neuen Patentschrift:
**20.05.87**

(51) Int. Cl.⁴: **G 02 B 6/24**

(21) Anmeldenummer: **81109751.8**

(22) Anmeldetag: **19.11.81**

(54) Optisches Verzweigungsglied.

(30) Priorität: **27.11.80 DE 3044667**
**05.09.81 DE 3135312**

(43) Veröffentlichungstag der Anmeldung:
**09.06.82 Patentblatt 82/23**

(45) Bekanntmachung des Hinweises auf die Patenterteilung:
**10.04.85 Patentblatt 85/15**

(45) Bekanntmachung des Hinweises auf die Entscheidung
über den Einspruch:
**20.05.87 Patentblatt 87/21**

(84) Benannte Vertragsstaaten:
**CH FR GB IT LI SE**

(56) Entgegenhaltungen:
**DE-A-2 625 097**
**DE-A-2 851 625**
**DE-A-2 851 654**
**DE-A-2 851 667**
**US-A-4 053 764**
**US-A-4 243 297**

(73) Patentinhaber: **Licentia Patent- Verwaltungs- GmbH,**
**Theodor- Stern- Kai 1, D-6000 Frankfurt/Main 70**
**(DE)**

(72) Erfinder: **Weidel, Edgar, Dipl.- Phys.,**
**Hudlerstrasse 25, D-7913 Senden (DE)**

(74) Vertreter: **Schickle, Gerhard, Dipl.- Ing., Licentia**
**Patent- Verwaltungs- GmbH Theodor- Stern- Kai**
**1, D-6000 Frankfurt/Main 70 (DE)**

EP 0 053 324 B2

LIBER, STOCKHOLM 1987

## Beschreibung

Die Erfindung betrifft ein optisches Verzweigungsglied, insbesondere für faseroptische Anwendungen, das der Verteilung von einem Lichtwellenleiter geführtem Licht auf mindestens zwei weitere Lichtwellenleiter dient.

Derartige Verzweigungsglieder sind bekannt, beispielsweise aus den Artikeln von H.F. Mahlein et al.: Interference filter as fiber directional coupler for W.D.M., Electronics Letters 15, 1980, Seiten 584-585, sowie E. Miyanchi et al.: Cornpact wave length multiplexer using optical-fiber pieces, Optics Letters 5. 1 980, Seiten 321 -322.

In derartigen Anordnungen werden die Endflächen von optischen Faserstücken in möglichst geringem Abstand voneinander derart befestigt, dass durch teildurchlässige oder wellenlängenabhängige Spiegelflächen, die auf schräg anpolierte Faserendflächen aufgebracht sind, eine Aufteilung des Lichtes aus einer Faser auf mehrere Fasern ermöglicht wird. In jeder der genannten Anordnungen wird ein Material zur Anpassung der optischen Brechungsindizes zwischen den Faserenden benutzt. Da jeweils in allen genannten Anordnungen dielektrische Spiegelschichten verwendet werden, ist es schwierig bzw. unmöglich, Faserenden und weitere optische Bauteile zu verschweissen. Eine einfache, bekannte optische Indexanpassung besteht darin, den Zwischenraum zwischen den Faserenden mit einem durchsichtigen Kunststoff, z.B. Epoxydharz, zu füllen. Dies ist für Versuchsmuster durchaus eine Lösung; es ist jedoch zweifelhaft, ob eine derartige Anordnung die Langzeitstabilität besitzt, die für eine gewerblich genutzte Anordnung gefordert wird. Denn Lichtintensitäten, die in faseroptischen Systemen üblicherweise auftreten, sind sehr hoch: Für eine Gradientenfaser mit einem Kerndurchmesser von 50 μm und eine Lichtleistung von 2mW, die im Faserkern geführt wird, errechnet sich eine Intensität von 10 W/cm2. Diese Intensität ist sehr hoch. Daher stellt sich die Frage, ob ein organischer Kitt (z.B. Epoxydharz) bei einer ständigen Beleuchtung mit derart hoher Lichtintensität nicht einem Alterungsprozess unterliegt, der z.B. zu einer Trübung oder Absorption des zunächst durchsichtigen Kitts führt.

Der Erfindung liegt daher die Aufgabe zugrunde, derartige optische Verzweigungsglieder dahingehend zu verbessern, dass eine Anpassung der optischen Brechungsindizes vermieden wird, und dass eine gute Langzeitstabilität erreichbar ist.

Diese Aufgabe wird erfindungsgemäss durch die im kennzeichnenden Teil des Patentanspruchs 1 angegebenen Merkmale gelöst.

Zweckmässige Ausführungsformen sind in den Unteransprüchen zusammengestellt.

Ein Vorteil der Erfindung besteht darin, dass das optische Verzweigungsglied als wartungsfreies optische Bauelement ausführbar ist.

Die Erfindung wird im folgenden anhand von Ausführungsbeispielen unter Bezugnahme auf die schematischen Zeichnungen näher erläutert. Es zeigen

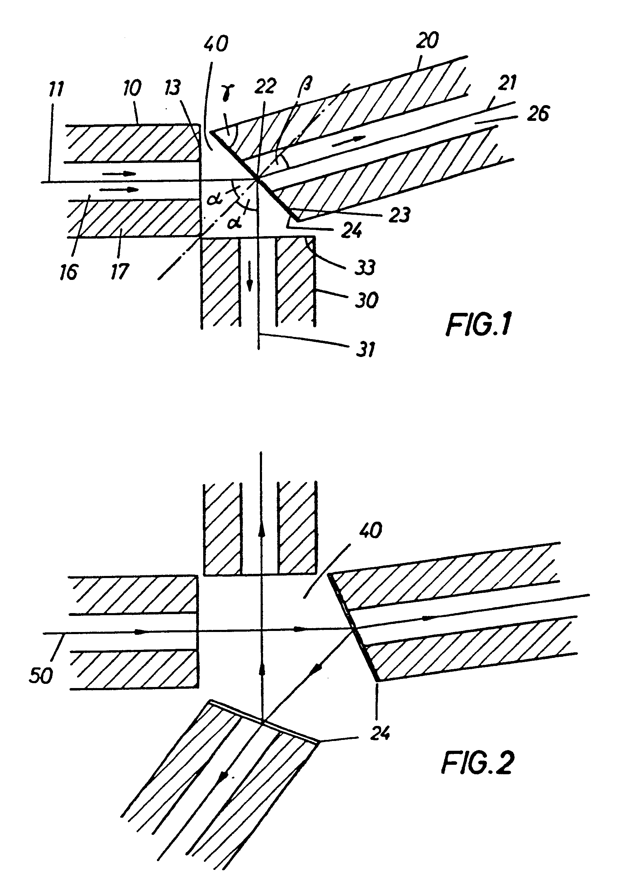

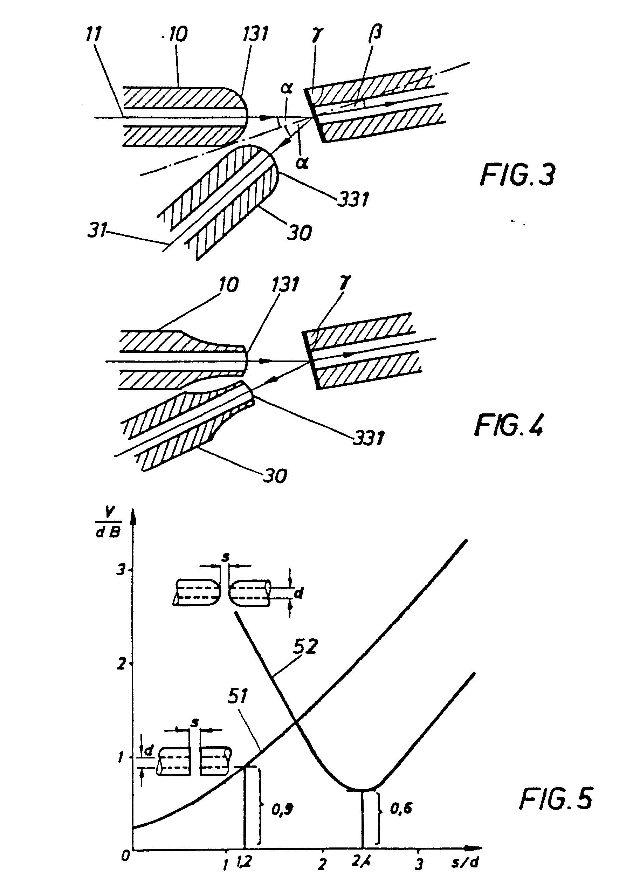

Fig. 1 bis 4 Ausführungsbeispiele der Erfindung Fig. 5 schematisches Diagramm zur Erläuterung der Fig. 4 und 5

Der Aufbau eines derartigen Verzweigungsglieds wird anhand von Fig. 1 erläutert. Das beispielsweise in einer Lichtleitfaser 10, mit Kern 16 und Mantel 17, ankommende Licht (Pfeile) soll dabei auf die Lichtleitfasern 20 und 30 aufgeteilt werden. Die Endfläche 13 der Lichtleitfaser 10 steht unter einem Winkel von 90° zur optischen Achse 11, das aus der Lichtleitfaser 10 in den Raum 40 austretende Licht wird nicht gebrochen, sondern läuft in Richtung der optischen Achse 11 weiter und trifft auf eine optische Schicht 24, beispielsweise einen dielektrischen, halbdurchlässigen Spiegel. Ein Teil des Lichtes wird unter dem Reflexionswinkel reflektiert und in Lichtleitfaser 30 eingekoppelt. in dem dargestellten Ausführungsbeispiel sind drei Lichtleitfasern 10, 20, 30 derart angeordnet, dass ihre optischen Achsen 11, 21, 31 einen gemeinsamen Punkt 22 besitzen, der auf der Schicht 24 liegt. Der andere Teil des Lichts wird an der Schicht 24 unter einem Winkel $\beta = \sin^{-1}(\frac{1}{n_k} \sin \alpha)$ in die Lichtleitfaser 20 gebrochen. $n_K$ ist dabei der effektive Brechungsindex des Faserkerns 26, $\alpha$ der Einfalls- und Reflexionswinkel des Lichtes. Dazu muss für einen Winkel $\gamma$ gelten:

$$\gamma = 90° - \beta.$$

Die im Ausführungsbeispiel verwendeten Daten sind:

$$\alpha = 45°; n_K = 1.46; \beta = \sin^{-1} \frac{1}{1.46} \sin 45° = 29°;$$
$$\gamma = 90° - \beta = 61°.$$

Für den Einfallswinkel $\alpha$ kann statt dessen auch ein anderer Winkel vorzugsweise zwischen 20° und 45° gewählt werden. $\beta$ und $\gamma$ ergeben sich dementsprechend.

Die Art der dielektrischen Schicht 24 bestimmt die Aufteilung des Lichts in Lichtleitfaser 20 und Lichtleitfaser 30. Je nach den Systemanforderungen ist es möglich, ein Teilungsverhältnis von 1:1 oder abweichend davon zu wählen; weiterhin ist es möglich, die Aufteilung wellenlängenunabhängig für die beteiligten Wellenlängen oder wellenlängenabhängig zu wählen; im wellenlängenabhängigen Fall ist beispielsweise die Schicht 24 derart ausgelegt, dass Licht der Wellenlängen $\lambda_1$ und $\lambda_2$ durch die Lichtleitfaser 10 ankommt, Licht der Wellenlänge $\lambda_1$ mit hohem Koppelwirkungsgrad in Lichtleitfaser 20 und Licht mit Wellenlänge $\lambda_2$ mit hohem Koppelwirkungsgrad in Lichtleitfaser 30 eingespeist wird. Eine derartige Anordnung nutzt das dichroitische Verhalten der Schicht 24 aus und ist beispielsweise in einem optischen Demultiplexer verwendbar.

Die Richtung des Lichtflusses ist zumindest teilweise umkehrbar. So ist beispielsweise ein Bauteil für den sogenannten Duplexbetrieb (Nutzung einer Leitung in zwei Richtungen) sinnvoll, bei dem das in Lichtleitfaser 10 ankommende Licht mit einer Wellenlänge $\lambda_1$, beispielsweise vollständig in Lichtleitfaser 30 eingespeist wird, während in Lichtleitfaser 20 ankommendes Licht (gegen die Pfeilrichtung), mit Wellenlänge $\lambda_2$, möglichst vollständig in Lichtleitfaser 10 (gegen die Pfeilrichtung) eingespeist wird. Ein derartiges Bauteil ermöglicht einen Gegensprechverkehr zwischen zwei Teilnehmern.

Neben der Vermeidung von Kittmaterial besteht ein weiterer erheblicher Vorteil der erfindungsgemässen Ausführung gegenüber den eingangs genannten bekannten Lösungen darin, dass Schichten 24 mit günstigeren Eigenschaften verwendbar sind. Wird in bekannten Lösungen ein Winkel $\alpha$ zwischen der Flächennormalen der Schicht 24 und der Faserachse 11 des ankommenden Lichts verwendet, so fällt das Licht von der Glasseite her (Brechungsindex $\approx$ 1.5) auf die Schicht 24. Im erfindungsgemässen Verzweiger fällt das Licht dagegen von der Glasseite her unter einem Winkel $\beta$ auf die Schicht 24. Aus der Optik dünner Schichten ist bekannt, dass die Kantensteilheit (optische Filterwirkung) einer dielektrischen Strahlteilerschicht im Wellenlängenbereich umso grösser gemacht werden kann, je weniger der Auftreffwinkel des Lichtes auf die Schicht vom senkrechten Auffall abweicht. Bei Abweichungen vom senkrechten Auftreffen werden die verschiedenen Polarisationsrichtungen des Lichts mit unterschiedlichem Reflexionsvermögen und unterschiedlicher Wellenlängenabhängigkeit reflektiert bzw. durchgelassen. Ebenso wird bei einem divergenten Lichtbündel die Kantensteilheit umso mehr verschlechtert, je mehr der Auftreffwinkel vom senkrechten Auffall abweicht. Bei Verzicht auf eine optische Kittschicht ist der Winkel $\beta$ für eine optische Filterwirkung wichtig, bei gleichem Winkel $\alpha$ wie in den bekannten verkitteten Lösungen; während im verkitteten Fall der Winkel $\alpha$ der bestimmende Winkel ist. Wird der Winkel $\alpha$ auf 20° beispielsweise verkleinert, so wird der Winkel $\beta$ = 13,5°. Bei einer derartigen Anordnung sind Strahlteilerschichten mit hervorragender Kantensteilheit benutzbar, die erfindungsgemässe Lösung ermöglicht daher für Wellenlängenmultiplexbetrieb die Trennung von dicht benachbarten Wellenlängen.

Als Lichtleitfasern sind alle Arten von optischen Fasern verwendbar, z.B. einwellige Fasern, Multimodefasern mit einem stufenförmigem Brechungsindexprofil oder Gradientenindexprofil.

Der erfindungsgemässe Verzweiger ist verlustbehaftet, da das Licht in einem Raum 40 eine Strecke in einem Medium ohne Wellenführung, beispielsweise Luft, zurücklegt. In diesem Bereich ohne Führung weitet das Lichtbündel durch Beugung und vor Strahldivergenz (Multimodefaser) auf, ein Teil des Lichtes wird nicht mehr in die Kerne der Fasern eingekoppelt. Zur Verringerung dieser Verluste ist es möglich, die Mäntel der Fasern, vorzugsweise von Lichtleitfaser 10 und Lichtleitfaser 30, teilweise zu entfernen, zum Beispiel durch Ätzen. Damit werden die Lichtwege im Medium ohne Wellenführung verringert und so die Verluste verkleinert.

Zum Schutz der Oberflächen vor Beschädigung oder Niederschlag von Feuchtigkeit ist es möglich, die Faserenden luftdicht zu kapseln.

Die Fig. 3 und 4 zeigen weitere Ausführungsbeispiele, deren Funktionsweise zunächst anhand der Fig. 5 näher erläutert wird. Fig. 5 zeigt in einem beispielhaften Diagramm die optischen Kopplungsverluste V, in dB, in Abhängigkeit von einem normierten Abstand s/d. Gemäss den in Fig. 5 angedeuteten Koppelanordnungen bedeutet s den Abstand (optische Weglänge) zweier Endflächen von koaxial angeordneten Lichtwellenleitern, die einen Kern und einen Mantel besitzen. Die dargestellten Kurven 51 sowie 52 beziehen sich auf beispielhafte Glasfaser-Lichtwellenleiter, deren Mantel jeweils einen Aussendurchmesser von ungefähr 1320 µm besitzt und deren Kerndurchmesser d ungefähr 50 µm beträgt. Die Kurve 51 zeigt die Koppelverluste, in Abhängigkeit vom Abstand s, für den Fall planer Endflächen, zwischen denen sich Luft als Koppelmedium befindet. Gemäss der Kurve 51 vergrössern sich die Koppelverluste V, sofern sich der Abstand s (optische Weglänge) vergrössert. In der der Kurve 52 zugrunde liegenden Koppelanordnung sind die Endflächen der Lichtwellenleiter zu sphärischen Linsen verschmolzen, deren Krümmungsradius ungefähr gleich dem halben Aussendurchmesser des Mantels ist. Die Kurve 52 zeigt ein deutliches Minimum der Koppelverluste V, das ungefähr bei dem normierten Abstand s/d = 2,4 liegt.

In einem optischen Verzweigungsglied gemäss Fig. 1 ist es aus konstruktiven Gründen nicht möglich, die optische Weglänge zwischen den planen Endflächen 13 und 33 kleiner als die dem normierten Abstand s/d = 1,2 entsprechende zu gestalten. Gemäss Fig. 5 ergibt sich aus Kurve 51 für diesen Wert ein Koppelverlust V von ungefähr 0,9 dB. Sind die Endflächen dagegen zu sphärischen Linsen verschmolzen, so ist es gemäss Kurve 52 zweckmässig, einen normierten Abstand s/d = 2,4 zu wählen, bei dem der Koppelverlust lediglich 0,6 dB beträgt. Daraus ergibt sich eine verdoppelte optische Weglänge, die bei einem gemäss Fig. 3 aufgebauten Verzweigungsglied die mechanische Konstruktion sowie die optische Justierung wesentlich vereinfacht. Ausserdem ist es möglich, den Winkel $2\alpha$ zwischen den Achsen 11 und 31 kleiner als 90° zu wählen. Eine derartige Anordnung bringt den weiteren Vorteil, dass die verwendeten Interferenzfilter selektiver wirken, denn bei Interferenzfiltern ist es zweckmässig, den Einfallswinkel des Lichts möglichst klein zu wählen.

Gemäss Fig.4 ist es weiterhin möglich, den Winkel 2α noch dadurch weiter zu verkleinern, dass im Bereich der Linsen 131 sowie 331 der Aussendurchmesser des Mantels der Lichtwellenleiter verringert wird, z.B. durch Ätzen.

Lichtwellenleiter mit angeschmolzenen Linsen sind ebenfalls sinngemäss verwendbar in einem Verzweigungsglied gemäss Fig. 2.

Zur weiteren Verringerung der Koppelverluste ist es zweckmässig, die den Raum 40 begrenzenden Endflächen und/oder Linsen mit einem sogenannten Antireflexbelag für das verwendete Licht zubeschichten.

In einem weiteren, nicht dargestellten Ausführungsbeispiel ist mindestens eine, den Raum 40 begrenzende Lichtleitfaser durch mindestens einen Photodetektor, beispielsweise eine Photodiode, ersetzt worden. Mit einer derartigen Anordnung ist es beispielsweise möglich, die Intensität des in eine Lichtleitfaser eingekoppelten Lichtes zu messen und/oder zu regeln.

**Patentansprüche**

1. Optisches Verzweigungsglied, bestehend aus mindestens drei Lichtwellenleitern (10, 20, 30), die derart angeordnet sind, daß sich ihre optischen Achsen (11, 21, 31) in mindestens einem Punkt (22) schneiden, der auf der Endfläche (23) eines Lichtwellenleiters (20) liegt, auf der eine reflektierende Schicht (24) aufgebracht ist, die das vom Sende-Lichtwellenleiter (10) kommende Licht teilweise reflektiert und teilweise durchläßt, dadurch gekennzeichnet,
- daß die Endflächen (13, 23, 33) der Lichtwellenleiter (10, 20, 30) einen Raum (40) begrenzen, der feststoff- und flüssigkeitsfrei ist,
- daß die Schicht (24) auf der Endfläche (23) des Lichtwellenleiters (20) aufgebracht ist, die in Lichtflussrichtung auf den Sende-Lichtwellenleiter (10) folgt, und
- daß diese Endfläche (23) unter einem Winkel (γ) gegenüber der optischen Achse (21) derart geneigt ist, daß das vom Sende-Lichtwellenleiter (10) kommende, auf die Endfläche (23) auftreffende Licht in den Lichtwellenleiter (20) einkoppelt und das von der Schicht (24) reflektierte Licht in den weiteren Lichtwellenleiter (30) gelangt.

3. Optisches Verzweigungsglied nach Anspruch 1 oder Anspruch 2, dadurch gekennzeichnet, daß der Raum (40) mit Luft gefüllt ist.

2. Optisches Verzweigungsglied nach Anspruch 1, dadurch gekennzeichnet, dass ein Sende-Lichtwellenleiter und mindestens drei weitere Lichtwellenleiter sternförmig angeordnet sind und dass auf die einander zugewandten Endflächen der weiteren Lichtwellenleiter jeweils eine teilweise reflektierende und teilweise durchlässige Schicht aufgebracht ist, so dass aus dem Sende-Lichtwellenleiter austretendes Licht nacheinander auf die beschichteten Endflächen trifft und in Abhängigkeit von den Schichten in die weiteren Lichtwellenleiter einkoppelt.

3. Optisches Verzweigungsglied nach Anspruch 1 oder Anspruch 2, dadurch gekennzeichnet, daß der Raum (40) mit Luft gefüllt ist.

4. Optisches Verzweigungsglied nach einem der vorhergehenden Ansprüche, dadurch gekennzeichnet, dass die Schicht (24) und/oder der Winkel (γ) derart ausgebildet sind, dass einfallendes Licht polerisiert wird.

5. Optisches Verzweigungsglied nach einem der vorhergehenden Ansprüche, dadurch gekennzeichnet, dass an mindestens einer den Raum (40) begrenzenden und von Licht getroffenen Fläche ein Photodetektor angeordnet ist.

6. Optisches Verzweigungsglied nach einem der vorhergehenden Ansprüche, dadurch gekennzeichnet, dass ein Lichtwellenleiter (10) als Lichtleitfaser ausgebildet ist, die einen Kern (16) und einen Mantel (17) besitzt.

7. Optisches Verzweigungsglied nach Anspruch 7, dadurch gekennzeichnet, dass ein Lichtwellenleiter (30) als Monomode-Lichtleitfaser ausgebildet ist.

8. Optisches Verzweigungsglied nach einem der vorhergehenden Ansprüche, dadurch gekennzeichnet, dass mindestens zwei Lichtwellenleiter zu einem integrierten optischen Bauelement zusammengefasst sind.

9. Optisches Verzweigungsglied nach einem der vorhergehenden Ansprüche, dadurch gekennzeichnet, dass die Schicht (24) als dichroitische Schicht ausgebildet ist.

10. Optisches Verzweigungsglied nach Anspruch 9, dadurch gekennzeichnet, dass die Schicht (24) als optische Filterschicht ausgebildet ist.

11. Optisches Verzweigungsglied nach Anspruch 10, dadurch gekennzeichnet, dass die Schicht (24) als Kanten-Filterschicht ausgebildet ist.

12. Optisches Verzweigungsglied nach einem der vorhergehenden Ansprüche, dadurch gekennzeichnet, dass die eine Endfläche eines Lichtwellenleiters (10) zu einer optischen Linse (131) verschmolzen ist (Fig. 3).

13. Optisches Verzweigungsglied nach Anspruch 12, dadurch gekennzeichnet, dass mindestens zwei Lichtwellenleiter (10, 30) vorhanden sind, deren Enden zu optischen Linsen (131, 331) verschmolzen, sind und dass die zwischen den Linsen (131, 331) vorhandene optische Weglänge (s) derart gewählt ist, dass das darüber übertragene Licht minimale Kopplungsverluste aufweist (Fig. 5).

14. Optisches Verzweigungsglied nach einem der Ansprüche 12 oder 13, dadurch gekennzeichnet, dass der Aussendurchmessr von mindestens einem Lichtwellenleiter (10) im Bereich der Endfläche, die als Linse (131) ausgebildet sein kann, verringert ist auf Werte, die zwischen dem Kernund dem Manteldurchmesser des Lichtwellenleiters liegen (Fig. 4).

15. Optisches Verzweigungsglied nach einem der Ansprüche 12 bis 14, dadurch gekennzeichnet, dass die optische Linse (131, 331) im wesentlichen sphärisch ausgebildet ist.

16. Optisches Verzweigungsglied nach Anspruch 15, dadurch gekennzeichnet, dass die sphärisch ausgebildete Linse (131, 331) einen Linsenradius besitzt, der im wesentlichen dem halben Aussendurchmesser des Lichtwellenleiters (10) entspricht (Fig. 3).

17. Optisches Verzweigungsglied nach einem der vorhergehenden Ansprüche, dadurch gekennzeichnet, dass mindestens eine Endfläche, die möglicherweise als Linse ausgebildet ist, mit einem Antireflexbelag versehen ist für das verwendete Licht.

## Claims

1. Optical branching member consisting of at least three light wave conductors (10, 20, 30), which are arranged in such a manner that their optical axes (11, 21, 31) intersect in at least one point (22), which lies on the and face (23) of a light wave conductor (20), on which face is applied a reflecting layer (24), which partially reflects and partially transmits the light coming from the sending light wave conductor (10), characterised thereby,
- that the end surfaces (13, 23, 33) of the light wave conductors (10, 20, 30) bound a space (40), which is free of solid substance and liquid,
- that the layer (24) is applied on that end face (23) of the light wave conductor (20), which in direction of light flux follows the sending light wave conductor (10), and
- that this end face (23) is inclined at an angle (γ) to the optical axis (21) in such a manner that the light coming from the sending light wave conductor (10) and impinging on the end face (23) is coupled into the light wave conductor (20) and the light reflected by the layer (24) gets into the further light wave conductor (30).

2. Optical branching member according to claim 1, characterised thereby, that a sending light wave conductor and at least three further light wave conductors are arranged in star shape and that a respective partially reflecting and partially transmitting layer is applied on each of the mutually facing end faces of the further light weve conductors so that light issuing out of the sending light wave conductor impinges on the costed end surfaces one after the other end is coupled in dependence on the layers into the further light wave conductors.

3. Optical branching member according to claim 1 or claim 2, characterised thereby, that the space (40) is filled by air.

4. Optical branching member according to one of the preceding claims, characterised thereby, that the layer (24) and/or the angle (γ) are formed in such a manner that incident light becomes polarised.

5. Optical branching member according to one of tha preceding claims, characterised thereby, that a photo-detector is arranged at at least one surface bounding the space (40) and impinged by light.

6. Optical branching member according to one of the preceding claims, characterised thereby, that a light wave conductor (10) is formed as optical fibrs conductor which possesses a core (16) and a shell (17).

7. Optical branching member according to claim 7, characterised thereby, that a light wave conductor (30) is formed as single mode optical fibre conductor.

8. Optical branching member according to one of the preceding claims, characterised thereby, that at least two light wave conductors are combined into an integrated optical componant.

9. Optical branching member according to one of the preceding claims, characterised thereby, that the layer (24) is formed as dichroic layer.

10. Optical branching member according to claim 9, characterised thereby, that the layer (24) is formed as optical filter layer.

11. Optical branching member according to claim 10, characterised thereby, that the layer (24) is formed as edge filter layer.

12. Optical branching member according to one of the preceding claims, characterised thereby, that the one and face of a light wave conductor (10) is melted into an optical lens (131) (Fig. 3).

13. Optical branching member according to claim 12, characterised thereby, that at last two light wave conductors (10, 30) are present, the ends of which are melted into optical lenses (131, 131) and that the optical path length (S) present between the lenses (131, 331) is chosen in such a manner that the light transmitted thereover displays minimum coupling losses (Fig. 5).

14. Optical coupling member according to one of the claims 12 or 13, characterised thereby, that the external diameter of at least one light wave conductor (10) is reduced in the region of the end face, which can be formed as lens (131), to values which lie between the core diameter and the shell diameter of the light wave conductor (Fig. 4).

15. Optical coupling member according to one of the claims 12 to 14, characterised thereby, that the optical lens (131, 331) is formed to be substantially spherical.

16. Optical branching member according to claim 15, characterised thereby, that the spherically formed lens (131, 331) possesses a lens radius which corresponds substantially to half the external diameter of the light wave conductor (10) (Fig. 3).

17. Optical branching member according to one of the preceding claims, characterised thereby, that at least one end face, which is possibly formed as lens, is provided with an antireflection coating for the light employed.

**Revendications**

1. Diviseur ou élément de dérivation optique constitué d'au moins trois guides d'ondes lumineuses (10, 20, 30) qui sont disposés de manière que leurs axes optiques (11, 21, 31) se coupent en au moins un point situé sur la face extrême (23) d'un guide d'ondes lumineuses (20) sur laquelle est appliquée une couche réfléchissante (24) qui réfléchit une partie et laisse passer une partie de la lumière venant du guide émetteur d'ondes lumineuses (10), caractérisé en ce que
- les faces extrêmes (13, 23, 33) des guides d'ondes lumineuses (10, 20, 30) délimitent un espace (40) qui est exempt de matière solide et de matière liquide,
- la couche réfléchissante (24) est appliquée sur la face extrême (23) du guide d'ondes lumineuses (20) qui fait suite au guide émetteur d'ondes lumineuses (10) dans la direction de propagation de la lumière et
- cette face extrême (23) est inclinée sur l'axe optique (21) d'un angle (γ) tel que la lumière venant du guide émetteur (10) et tombant sur la face extrême (23) est introduite dans ledit guide d'ondes lumineuses (20) et que la lumière réfléchie par la couche réfléchissante (24) est envoyée dans le guide d'ondes lumineuses (30) restant.

2. Diviseur optique selon la revendication 1, caractérisé en ce qu'un guide d'ondes lumineuses formant émetteur et au moins trois autres guides d'ondes lumineuses sont disposés en étoile et en ce qu'une couche partiellement réfléchissante et partiellement transparente est appliquée de telle manière sur chacune des faces extrêmes dirigées l'une vers l'autre des autres guides que la lumière sortant du guide émetteur tombe successivement sur les faces extrêmes portant les couches et pénètre dans les autres guides en fonction des couches.

3. Diviseur optique selon la revendication 1 ou 2, caractérisé en ce que l'espace (40) est rempli d'air.

4. Diviseur optique selon l'une des revendications précédentes, caractérisé en ce que la couche (24) et/ou l'angle (γ) sont tels que la lumière incidente est polarisée.

5. Diviseur optique selon l'une des revendications précédentes, caractérisé en ce qu'un photodétecteur est disposé sur au moins l'une des faces délimitant l'espace (40) et recevant de la lumière.

6. Diviseur optique selon l'une des revendications précédentes caractérisé en ce qu'un guide d'ondes lumineuses (10) est réalisé sous forme d'une fibre optique possédant une âme (16) et un revêtement (17).

7. Diviseur optique selon la revendication 6 caractérisé en ce qu'un guide d'ondes lumineuses (30) est réalisé sous forme d'une fibre optique monomode.

8. Diviseur optique selon l'une des revendications précédentes caractérisé en ce qu'au moins deux guides d'ondes lumineuses sont réunis en un composant optique intégré.

9. Diviseur optique selon l'une des revendications précédentes caractérisé en ce que la couche (24) est une couche dichroïque.

10. Diviseur optique selon la revendication 9, caractérisé en ce que la couche (24) est une couche optique filtrante.

11. Diviseur optique selon la revendication 10 caractérisé en ce que la couche (24) est une couche filtrante à arêtes.

12. Diviseur optique selon l'une des revendications précédentes caractérisé en ce que la face extrême d'un des guides d'ondes lumineuses (10) est fondue ou fusionnée en une lentille optique (131) (figure 3).

13. Diviseur optique selon la revendication 12 caractérisé en ce qu'il comporte au moins deux guides d'ondes lumineuses (10, 30) dont les extrémités sont fusionnées en lentilles optiques (131, 331) et en ce que la longueur du parcours optique entre les lentilles (131 331) est choisie de manière que la lumière transmise par ce parcours présente des pertes de couplage minimales (figure 5).

14. Diviseur optique selon la revendication 12 ou 13 caractérisé en ce que le diamètre extérieur d'au moins un des guides d'ondes lumineuses (10) est réduit dans la région de la face extrême, laquelle peut être réalisée sous forme d'une lentille (131) à des valeurs comprises entre le diamètre de l'âme et le diamètre du revêtement du guide (figure 4).

15. Diviseur optique selon l'une des revendications 12 à 14 caractérisé en ce que la lentille optique (131, 331) est essentiellement sphérique.

16. Diviseur optique selon la revendication 15 caractérisé en ce que la lentille sphérique (131, 331) possède un rayon qui correspond essentiellement à la moitié du diamètre extérieur du guide (10) (figure 3).

17. Diviseur optique selon l'une des revendications précédentes caractérisé en ce qu'au moins une face extrême éventuellement réalisée sous forme d'une lentille est pourvue d'un revêtement antireflet pour la lumière employée.

FIG.1

FIG.2

FIG.3

FIG.4

FIG.5